# FASCICULE DE BREVET EUROPEEN

(11) **EP 3 643 401 B1**
(45) Date de publication et mention de la délivrance du brevet: **15.03.2023**
(21) Numéro de dépôt: 19203049.2
(22) Date de dépôt: 14.10.2019
(51) Int. Cl.: B01J 23/00, B01J 23/75, B01J 37/02, C10G 2/00

(54) **CATALYSEUR DE COBALT A BASE D'UN SUPPORT COMPRENANT UNE PHASE D'OXYDE MIXTE CONTENANT DU COBALT ET/OU DU NICKEL PREPARE A PARTIR D'UN COMPOSE DILACTONE**
KOBALTKATALYSATOR AUF BASIS EINES TRÄGERSTOFFS, DER EINE GEMISCHTE OXIDPHASE UMFASST, DIE KOBALT UND/ODER NICKEL ENTHÄLT UND AUF DER GRUNDLAGE EINER DILACTONVERBINDUNG HERGESTELLT WIRD
COBALT CATALYST COMPRISING A SUPPORT WITH A MIXED OXIDE PHASE CONTAINING COBALT AND/OR NICKEL PREPARED FROM A DILACTONE COMPOUND

(30) Priorité: 25.10.2018 FR 1871302
(43) Date de publication de la demande: 29.04.2020
(73) Titulaire: IFP Energies nouvelles, 92852 Rueil-Malmaison Cedex (FR)
(72) Inventeur: DELCROIX, Damien, 92852 RUEIL-MALMAISON CEDEX (FR); CORRAL VALERO, Manuel, 92852 RUEIL-MALMAISON CEDEX (FR)

(56) Documents cités:
- FR-A1- 3 050 659
- FR-A1- 3 050 663
- US-A1- 2014 353 213

## Description

### Domaine technique

L'invention concerne un procédé de préparation d'un catalyseur contenant une phase active de cobalt, déposée sur un support comprenant de l'alumine, de la silice ou de la silice-alumine, ledit support contenant une phase d'oxyde mixte contenant du cobalt et/ou du nickel, ledit catalyseur a été préparé en introduisant au moins un composé organique spécifique de la famille des dilactones. L'invention décrit également l'utilisation du catalyseur dans le domaine des procédés de synthèse Fischer-Tropsch.

### Technique antérieure

Les procédés de synthèse Fischer-Tropsch permettent d'obtenir une large gamme de coupes hydrocarbonées à partir du mélange CO + H₂, communément appelé gaz de synthèse ou syngas.

L'équation stoechiométrique simplifiée (limitée dans l'équation ci-dessous à la formation d'alcanes) de la synthèse Fischer-Tropsch s'écrit :

n CO + (2n+1) H₂ -> CₙH₂ₙ₊₂ + n H₂O

Les catalyseurs utilisés en synthèse Fischer-Tropsch sont le plus souvent des catalyseurs supportés à base d'alumine, de silice ou de silice-alumine ou de combinaisons de ces supports, la phase active étant principalement constituée de fer (Fe) ou de cobalt (Co) éventuellement dopée par un métal noble tel que le platine (Pt), le rhodium (Rh) ou le ruthénium (Ru).

L'ajout d'un composé organique sur les catalyseurs Fischer-Tropsch pour améliorer leur activité a été préconisé par l'Homme du métier.

De nombreux documents décrivent l'utilisation de différentes gammes de composés organiques en tant qu'additifs, tels que des composés organiques contenant de l'azote et/ou des composés organiques contenant de l'oxygène.

En particulier, les brevets US 5.856.260 et US 5.856.261 enseignent respectivement l'introduction, lors de la préparation du catalyseur, de polyols de formule générale CnH₂ₙ₊₂Oₓ avec n un nombre entier compris entre 2 et environ 6, et x un entier compris entre 2 et 11 ou de sucres de type mono- ou disaccharides, le sucrose étant particulièrement préféré.

La demande de brevet US 2005/0026776 enseigne l'utilisation de composés chélatants de type acide nitrilotriacétique (NTA), acide trans-1,2-cyclohexadiamine-N,N,N',N' tétraacétique (CyDTA) ou acide éthylènediaminetétraacétique (EDTA), ou encore de glycine, d'acide aspartique ou acide citrique pour l'obtention d'un catalyseur à taille réduite de cristallites Co₃O₄. D'autres documents enseignent l'utilisation de polyéthers (WO2014/092278 et WO2015/183061), d'acide glyoxylique (WO2015/183059), d'acides dicarboxyliques insaturés (US2011/0028575) ou encore d'acides carboxyliques multifonctionnels de formule HOOC-(CRR¹)ₙ-COOH avec n≥ 1 dans la préparation de catalyseurs Fischer-Tropsch (WO98/47618).

La demande de brevet FR 3050659 décrit l'utilisation de lactones, de mono- et diesters linéaires et de carbonates cycliques pour augmenter l'activité et la sélectivité de catalyseurs pour la synthèse Fischer-Tropsch.

Le document WO2012/013866 divulgue l'utilisation d'un oligosaccharide cyclique, notamment de la cyclodextrine, comme additif d'un catalyseur Fischer-Tropsch. Ce document décrit aussi l'utilisation d'un support à base de silice-alumine contenant optionnellement une spinelle.

Quels que soient les composés choisis, les modifications induites ne permettent pas toujours d'accroître suffisamment les performances du catalyseur pour rentabiliser le procédé. De plus, il est souvent très compliqué de procéder à leur déploiement industriel tant les méthodes sont complexes à mettre en oeuvre.

En conséquence, il ressort comme indispensable, pour les fabricants de catalyseurs, de trouver de nouveaux procédés de préparation de catalyseurs pour la synthèse Fischer-Tropsch à performances améliorées.

### Objectifs et Résumé de l'invention

L'invention porte, selon un premier aspect, sur un procédé de préparation d'un catalyseur contenant une phase active de cobalt, déposée sur un support comprenant de l'alumine, de la silice ou de la silice-alumine, ledit support contenant une phase d'oxyde mixte contenant du cobalt et/ou du nickel, ledit procédé comprenant au moins
a) une étape de mise en contact d'un support comprenant de l'alumine, de la silice ou de la silice-alumine avec au moins une solution contenant au moins un précurseur de cobalt et/ou de nickel, puis on sèche à une température inférieure à 200°C et on calcine à une température comprise entre 700°C et 1200°C, de manière à obtenir une phase d'oxyde mixte contenant du cobalt et/ou du nickel dans le support,
   puis on effectue
b) une étape de mise en contact dudit support contenant ladite phase d'oxyde mixte avec au moins une solution contenant au moins un précurseur de cobalt,
c) une étape de mise en contact dudit support contenant ladite phase d'oxyde mixte avec au moins un composé organique de la famille des dilactones choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione,
   les étapes b) et c) pouvant être réalisées séparément, dans un ordre indifférent, ou simultanément,
d) puis on effectue une étape de séchage à une température inférieure à 200°C.

Aucun des documents cités portant sur les additifs ne décrit un procédé de préparation d'un catalyseur à base de cobalt déposé sur un support contenant une phase d'oxyde mixte contenant du cobalt et/ou du nickel comprenant une étape de mise en contact dudit support avec au moins un composé organique de la famille des dilactones cité dans la revendication 1.

La demanderesse a en effet constaté que l'utilisation d'un composé organique de la famille des dilactones cité dans la revendication 1 en tant qu'additif organique lors de la préparation d'un catalyseur contenant une phase active de cobalt, déposée sur un support comprenant de l'alumine, de la silice ou de la silice-alumine, ledit support contenant également une phase d'oxyde mixte contenant du cobalt et/ou du nickel permettait d'obtenir un catalyseur pour la synthèse Fischer-Tropsch montrant des performances catalytiques améliorées.

En effet, le catalyseur préparé selon l'invention montre une activité et une sélectivité augmentées par rapport aux catalyseurs contenant une phase d'oxyde mixte contenant du cobalt et/ou du nickel dans leur support mais préparés sans additivation par un composé organique de la famille des dilactones cité dans la revendication 1 ou par rapport aux catalyseurs additivés ne comportant pas de phase d'oxyde mixte contenant du cobalt et/ou du nickel dans le support. L'utilisation d'un tel composé organique durant la préparation d'un catalyseur à base de cobalt comprenant un support contenant une phase d'oxyde mixte contenant du cobalt et/ou du nickel semble avoir un effet synergique sur l'activité et la sélectivité dans un procédé Fischer-Tropsch.

Sans être lié à aucune théorie, il a été mis en évidence qu'un tel catalyseur présente une dispersion du cobalt sensiblement supérieure à celle présentée par des catalyseurs préparés en l'absence d'un tel composé organique. Il en résulte la présence d'un plus grand nombre de sites actifs pour les catalyseurs préparés en présence d'au moins un composé organique de la famille des dilactones, même si ce composé dilactone est au moins partiellement éliminé par la suite par un séchage et éventuellement une calcination.

Selon une variante, la teneur en phase d'oxyde mixte dans le support est comprise entre 0,1 % et 50 % poids par rapport au poids du support.

Selon une variante, la phase d'oxyde mixte comprend un aluminate de formule CoAl₂O₄ ou NiAl₂O₄ dans le cas d'un support à base d'alumine ou de silice-alumine.

Selon une variante, la phase d'oxyde mixte comprend un silicate de formule Co₂SiO₄ ou Ni₂SiO₄ dans le cas d'un support à base de silice ou de silice-alumine.

Selon une variante, la teneur en silice dudit support est comprise entre 0,5 % poids à 30 % poids par rapport au poids du support avant la formation de la phase d'oxyde mixte lorsque le support est une silice-alumine.

Selon une variante, le rapport molaire de composé organique de la famille des dilactones introduit lors de l'étape c) par rapport à l'élément de cobalt introduit à l'étape b) est compris entre 0,01 mol/mol et 2,0 mol/mol.

Selon une variante, la teneur en élément cobalt introduit lors de l'étape b) en tant que phase active est comprise entre 2% et 40% poids exprimé en élément cobalt métallique par rapport au poids total du catalyseur.

Selon une variante, le catalyseur comprend en outre un élément choisi parmi les groupes VIIIB, IA, IB, IIA, IIB, IIIA, IIIB et VA.

Selon une variante, le catalyseur contient en outre un composé organique supplémentaire autre que le composé de la famille des dilactones, ledit composé organique supplémentaire contenant de l'oxygène et/ou de l'azote, et comportant de préférence une ou plusieurs fonctions chimiques choisies parmi une fonction carboxylique, alcool, éther, aldéhyde, cétone, amine, nitrile, imide, oxime, urée et amide.

Selon une variante, après l'étape de séchage d), on effectue une étape de calcination e) à une température comprise entre 200 et 550°C, sous une atmosphère inerte ou sous une atmosphère contenant de l'oxygène.

Selon une variante, on réduit le catalyseur obtenu à l'étape de séchage d) ou obtenu à l'étape de calcination e) à une température comprise entre 200°C et 500°C.

Le catalyseur obtenu selon l'invention est utilisé dans un procédé de synthèse Fischer-Tropsch de synthèse d'hydrocarbures dans lequel le catalyseur préparé selon l'invention est mis en contact avec une charge comprenant du gaz de synthèse sous une pression totale comprise entre 0,1 MPa et 15 MPa, sous une température comprise entre 150°C et 350°C, et à une vitesse volumique horaire comprise entre 100 et 20000 volumes de gaz de synthèse par volume de catalyseur et par heure avec un rapport molaire H₂/CO du gaz de synthèse entre 0,5 et 4.

### Description détaillée de l'invention

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

Les propriétés texturales et structurales du support et du catalyseur décrits ci-après sont déterminées par les méthodes de caractérisation connues de l'homme du métier. Le volume poreux total et la distribution poreuse sont déterminés dans la présente invention par porosimétrie à l'azote tel que décrit dans l'ouvrage « Adsorption by powders and porous solids. Principles, methodology and applications » écrit par F. Rouquérol, J. Rouquérol et K. Sing, Academic Press, 1999.

On entend par surface spécifique, la surface spécifique BET (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309.

Le catalyseur obtenu par le procédé de préparation selon l'invention est un catalyseur contenant une phase active de cobalt, déposée sur un support comprenant de l'alumine, de la silice ou de la silice-alumine, ledit support contenant une phase d'oxyde mixte contenant du cobalt et/ou du nickel, ledit procédé comprenant au moins :
a) une étape de mise en contact d'un support comprenant de l'alumine, de la silice ou de la silice-alumine avec au moins une solution contenant au moins un précurseur de cobalt et/ou de nickel, puis on sèche à une température inférieure à 200°C et on calcine à une température comprise entre 700°C et 1200°C, de manière à obtenir une phase d'oxyde mixte contenant du cobalt et/ou du nickel dans le support,
   puis on effectue
b) une étape de mise en contact dudit support contenant ladite phase d'oxyde mixte avec au moins une solution contenant au moins un précurseur de cobalt,
c) une étape de mise en contact dudit support contenant ladite phase d'oxyde mixte avec au moins un composé organique de la famille des dilactones tel que cité dans la revendication 1, les étapes b) et c) pouvant être réalisées séparément, dans un ordre indifférent, ou simultanément,
d) puis on effectue une étape de séchage à une température inférieure à 200°C.

Les différentes étapes du procédé menant au catalyseur sont détaillées dans les paragraphes qui suivent.

### Etape a) Formation de la phase d'oxyde mixte contenant du cobalt et/ou du nickel

L'objectif de l'étape a) est la formation d'une phase d'oxyde mixte contenant du cobalt et/ou du nickel dans un support comprenant de l'alumine, de la silice ou de la silice-alumine par la mise en contact d'une solution contenant au moins un précurseur de cobalt et/ou de nickel, suivie d'un séchage et d'une calcination à haute température.

Il est connu que la présence d'une phase d'oxyde mixte contenant du cobalt et/ou du nickel dans un support de type alumine, silice ou silice-alumine permet d'améliorer la résistance au phénomène d'attrition chimique et mécanique dans un procédé Fischer-Tropsch, et donc de stabiliser le support. La formation de la phase d'oxyde mixte dans le support, souvent appelé étape de stabilisation du support, peut être effectuée par toute méthode connue de l'Homme du métier. Elle est généralement effectuée en introduisant le cobalt et/ou le nickel sous forme d'un précurseur de sel par exemple de type nitrate sur le support initial contenant l'alumine, la silice ou la silice-alumine. Par calcination à très haute température, la phase d'oxyde mixte contenant du cobalt et/ou du nickel, est formée et stabilise l'ensemble du support. Le cobalt et/ou le nickel contenu dans la phase d'oxyde mixte n'est pas réductible lors de l'activation finale du catalyseur Fischer-Tropsch (réduction). Le cobalt et/ou le nickel contenu dans la phase d'oxyde mixte ne constitue(nt) donc pas la phase active du catalyseur.

Selon l'étape a) on effectue une étape de mise en contact d'un support comprenant de l'alumine, de la silice ou de la silice-alumine avec au moins une solution contenant au moins un précurseur de cobalt et/ou de nickel, puis on sèche et on calcine à une température comprise entre 700°C et 1200°C, de manière à obtenir une phase d'oxyde mixte contenant du cobalt et/ou du nickel dans le support.

Plus particulièrement, l'étape a) de mise en contact peut être effectuée par imprégnation, de préférence à sec, d'un support comprenant de l'alumine, de la silice ou de la silice-alumine, préformé ou en poudre, avec au moins une solution aqueuse contenant le précurseur de cobalt et/ou de nickel, suivie d'un séchage à une température inférieure à 200°C et d'une calcination à une température comprise entre 700°C et 1200°C.

Le cobalt est mis au contact du support par l'intermédiaire de tout précurseur de cobalt soluble en phase aqueuse. De manière préférée, le précurseur de cobalt est introduit en solution aqueuse, de préférence sous forme de nitrate, de carbonate, d'acétate, de chlorure, de complexes formés avec les acétylacétonates, ou de tout autre dérivé inorganique soluble en solution aqueuse, laquelle est mise en contact avec ledit support. Le précurseur de cobalt avantageusement utilisé est le nitrate de cobalt ou l'acétate de cobalt.

Le nickel est mis au contact du support par l'intermédiaire de tout précurseur de nickel soluble en phase aqueuse. De manière préférée, ledit précurseur de nickel est introduit en solution aqueuse, par exemple sous forme de nitrate, de carbonate, d'acétate, de chlorure, d'hydroxyde, d'hydroxycarbonate, d'oxalate, de complexes formés avec les acétylacétonates, ou de tout autre dérivé inorganique soluble en solution aqueuse, laquelle est mise en contact avec ledit support. Le précurseur de nickel avantageusement utilisé est le nitrate de nickel, le chlorure de nickel, l'acétate de nickel ou le hydroxycarbonate de nickel.

La teneur totale en cobalt et/ou en nickel est avantageusement comprise entre 1 % et 20 % poids et de préférence entre 2 % et 10 % poids par rapport à la masse totale du support final.

Le séchage est effectué à une température inférieure à 200°C, de préférence à une température supérieure à 60°C. La durée de séchage peut aller de 30 minutes à trois heures.

La calcination est effectuée à une température comprise entre 700°C et 1200°C, de préférence comprise entre 850°C et 1200°C, et de manière préférée comprise entre 850°C et 900°C, généralement pendant une durée comprise entre une heure et 24 heures et de préférence comprise entre 2 heures et 5 heures. La calcination est généralement effectuée sous atmosphère oxydante, par exemple sous air, ou sous air appauvri en oxygène ; elle peut également être effectuée au moins en partie sous azote. Elle permet de transformer les précurseurs de cobalt et/ou de nickel et l'alumine et/ou la silice en phase d'oxyde mixte contenant du cobalt et/ou du nickel.

Selon une variante, la calcination peut également être effectuée en deux étapes, ladite calcination est avantageusement réalisée à une température comprise entre 300°C et 600°C sous air pendant une durée comprise entre une demi-heure et trois heures, puis à une température comprise entre 700°C et 1200°C, de préférence comprise entre 850°C et 1200°C et de manière préférée entre 850°C et 900°C, généralement pendant une durée comprise entre une heure et 24 heures, et de préférence comprise entre 2 heures et 5 heures.

Le support comprend de l'alumine, de la silice ou de la silice-alumine.

Lorsque le support comprend de l'alumine, il contient plus de 50 % poids d'alumine par rapport au poids du support avant la formation de la phase oxyde mixte et, de façon préférée, il contient uniquement de l'alumine. L'alumine peut être présente sous une forme cristallographique de type alumine gamma, delta, thêta, alpha, prises seules ou en mélange.

Dans un autre cas préféré, le support comprend de la silice. Dans ce cas, il contient plus de 50 % poids de silice par rapport au poids du support avant la formation de la phase oxyde mixte et, de façon préférée, il contient uniquement de la silice. Les sources de silicium sont bien connues de l'homme du métier.

Dans un autre cas préféré, le support comprend une silice-alumine. On entend par un support comprenant une silice-alumine un support dans lequel le silicium et l'aluminium est sous forme d'agglomérats de silice ou d'alumine respectivement, d'aluminosilicate amorphe ou toute autre phase mixte contenant du silicium et de l'aluminium, étant entendu que le support n'est pas mésostructuré. Par support mésostructuré on entend un support comportant des pores ayant un diamètre uniforme compris entre 2 nm et 50 nm, préférentiellement répartis de façon homogène et régulière, aussi appelé porosité « organisée » à l'échelle de la particule. De préférence, l'alumine et la silice sont présents sous forme de mélange d'oxydes SiO₂-Al₂O₃. La teneur en silice dans le support silice-alumine varie de 0,5 % poids à 30 % poids, de manière préférée de 1 % poids à 25 % poids, et de manière encore plus préférée de 1,5 % à 20 % poids par rapport au poids du support avant la formation de la phase oxyde mixte.

Selon une variante préférée, le support est constitué, avant la formation de la phase d'oxyde mixte, d'alumine, de silice ou de silice-alumine, et de manière particulièrement préférée le support est constitué, avant la formation de la phase d'oxyde mixte, de silice-alumine.

Le support contient également une phase d'oxyde mixte contenant du cobalt et/ou du nickel. On entend par phase d'oxyde mixte contenant du cobalt et/ou du nickel, une phase dans laquelle des cations de cobalt et/ou du nickel sont combinés avec les ions oxydes O²⁻ du support d'alumine et/ou de silice formant ainsi une phase mixte contenant des aluminates et/ou des silicates contenant du cobalt et/ou du nickel. La phase d'oxyde mixte peut être sous forme amorphe ou sous forme cristallisée.

Lorsque le support est à base d'alumine, la phase d'oxyde mixte peut comprendre un aluminate de formule CoAl₂O₄ ou NiAl₂O₄, sous forme amorphe ou cristallisée, par exemple sous forme spinelle. Lorsque le support est à base de silice, la phase d'oxyde mixte peut comprendre un silicate de formule Co₂SiO₄ ou Ni₂SiO₄ (cobalt- ou nickelorthosilicate), sous forme amorphe ou cristallisée.

Lorsque le support est à base de silice-alumine, la phase d'oxyde mixte peut comprendre un aluminate de formule CoAl₂O₄ ou NiAl₂O₄ sous forme amorphe ou cristallisée, par exemple sous forme spinelle, et/ou un silicate de formule Co₂SiO₄ ou Ni₂SiO₄, sous forme amorphe ou cristallisée.

Généralement, la teneur de la phase d'oxyde mixte dans le support est comprise entre 0,1 % et 50 % poids par rapport au support, de préférence entre 0,5 % et 30 % poids, et de manière plus préférée entre 1 % et 20 % poids.

La présence de phase d'oxyde mixte dans le catalyseur se mesure par Réduction en Température Programmée RTP (ou TPR pour "Température Programmed Réduction" selon la terminologie anglo-saxonne) tel que par exemple décrit dans Oil & Gas Science and Technology, Rev. IFP, Vol. 64 (2009), No. 1, pp. 11-12. Selon cette technique, le catalyseur est chauffé sous flux d'un réducteur, par exemple sous flux de dihydrogène. La mesure du dihydrogène consommé en fonction de la température donne des informations quantitatives sur la réductibilité des espèces présentes. La présence d'une phase d'oxyde mixte dans le catalyseur se manifeste ainsi par une consommation de dihydrogène à une température supérieure à environ 800°C.

Le support peut présenter une morphologie sous forme de billes, d'extrudés (par exemple de forme trilobes ou quadrilobes) ou de pastilles, notamment lorsque ledit catalyseur est mis en oeuvre dans un réacteur fonctionnant en lit fixe, ou présenter une morphologie sous forme de poudre de granulométrie variable, notamment lorsque ledit catalyseur est mis en oeuvre dans un réacteur de type colonne à bulles (ou "slurry bubble column" selon la terminaison anglaise). La taille des grains du catalyseur peut être comprise entre quelques microns et quelques centaines de microns. Pour une mise en oeuvre en réacteur "slurry", la taille des particules du catalyseur est préférentiellement comprise entre 10 microns et 500 microns, de manière préférée entre 10 microns et 300 microns, de manière très préférée entre 20 microns et 200 microns, et de manière encore plus préférée entre 30 microns et 160 microns.

La surface spécifique du support contenant la phase d'oxyde mixte est généralement comprise entre 50 m²/g et 500 m²/g, de préférence entre 100 m²/g et 300 m²/g, de façon plus préférée entre 150 m²/g et 250 m²/g. Le volume poreux dudit support est généralement compris entre 0,3 ml/g et 1,2 ml/g, et de préférence compris entre 0,4 ml/g et 1 ml/g.

Ainsi, à l'issue de ladite étape a), ledit support comprenant de l'alumine, de la silice ou de la silice-alumine comprend en outre une phase d'oxyde mixte contenant du cobalt et/ou du nickel.

### Etapes b) et c) : Introduction de la phase active et introduction du composé dilactone

Après la formation de la phase d'oxyde mixte, on effectue les étapes suivantes dans la préparation du catalyseur :
b) une étape de mise en contact dudit support contenant ladite phase d'oxyde mixte avec au moins une solution contenant au moins un précurseur de cobalt,
c) une étape de mise en contact dudit support contenant ladite phase d'oxyde mixte avec au moins un composé organique de la famille des dilactones cité dans la revendication 1,
les étapes b) et c) pouvant être réalisées séparément, dans un ordre indifférent, ou simultanément.

### Etape b)

L'étape b) de mise en contact dudit support avec au moins une solution contenant au moins un précurseur de cobalt, peut être réalisée par toute méthode bien connue de l'Homme du métier. Ladite étape b) est préférentiellement réalisée par imprégnation du support par au moins une solution contenant au moins un précurseur de cobalt. En particulier, ladite étape b) peut être réalisée par imprégnation à sec, par imprégnation en excès, ou encore par dépôt - précipitation (tel que décrit dans les brevets US 5.874.381 et US 6.534.436) selon des méthodes bien connues de l'Homme du métier. De manière préférée, ladite étape b) est réalisée par imprégnation à sec, laquelle consiste à mettre en contact le support du catalyseur avec une solution, contenant au moins un précurseur de cobalt, dont le volume est égal au volume poreux du support à imprégner. Cette solution contient le précurseur de cobalt à la concentration voulue.

Le cobalt est mis au contact dudit support par l'intermédiaire de tout précurseur de cobalt soluble en phase aqueuse ou en phase organique. Lorsqu'il est introduit en solution organique, ledit précurseur de cobalt est par exemple l'acétate de cobalt. De manière préférée, ledit précurseur de cobalt est introduit en solution aqueuse, par exemple sous forme de nitrate, de carbonate, d'acétate, de chlorure, de complexes formés avec les acétylacétonates, ou de tout autre dérivé inorganique soluble en solution aqueuse, laquelle est mise en contact avec ledit support. On utilise avantageusement comme précurseur de cobalt, le nitrate de cobalt ou l'acétate de cobalt.

La teneur en élément cobalt est comprise entre 2 % et 40 % poids, de préférence entre 5 % et 30 % poids, et de manière plus préférée entre 10 % et 25 % poids exprimé en élément cobalt métallique par rapport au poids total du catalyseur.

Le catalyseur peut avantageusement comprendre en outre au moins un élément choisi parmi un élément des groupes VIIIB, IA, IB, IIA, IIB, IIIA, IIIB et/ou VA. Un tel élément peut jouer le rôle de promoteur du cobalt, permettant d'améliorer l'activité et/ou la sélectivité du catalyseur.

Les éventuels éléments du groupe VIIIB préférés sont le platine, le ruthénium et le rhodium. Les éléments du groupe IA préférés sont le sodium et le potassium. Les éléments du groupe IB préférés sont l'argent et l'or. Les éléments du groupe IIA préférés sont le manganèse et le calcium. L'élément du groupe IIB préféré est le zinc. Les éléments du groupe IIIA préférés sont le bore et l'indium. Les éléments du groupe IIIB préférés sont le lanthane et le cérium. L'élément du groupe VA préféré est le phosphore.

La teneur en élément éventuel des groupes VIIIB, IA, IB, IIA, IIB, IIIA, IIIB et/ou VA est comprise entre 50 ppm et 20 % poids, de préférence entre 100 ppm et 15 % poids, et de manière plus préférée entre 100 ppm et 10 % poids exprimé en élément par rapport au poids total du catalyseur.

Selon une variante, lorsque le catalyseur contient un élément ou plusieurs éléments supplémentaires des groupes VIIIB, IA, IB, IIA, IIB, IIIA, IIIB et/ou VA, ce ou ces éléments peuvent être soit initialement présent sur le support avant la préparation du catalyseur, soit introduit à n'importe quel moment de la préparation et par toutes méthodes connues de l'homme du métier.

### Etape c)

La mise en contact du composé organique de la famille des dilactones employé pour la mise en oeuvre de ladite étape c) avec ledit support est réalisée par imprégnation, notamment par imprégnation à sec ou imprégnation en excès, préférentiellement par imprégnation à sec. Ledit composé organique est préférentiellement imprégné sur ledit support après solubilisation en solution aqueuse.

Ledit composé organique de la famille des dilactones est un composé organique cyclique comportant deux fonctions lactones dans le même cycle. Ledit composé cyclique peut comprendre un cycle à 4, 5, 6 ou 7 chaînons, substitués ou non, et on parlera alors respectivement de dioxétanediones, dioxolanediones, dioxanediones et dioxépanediones, tous ces composés comportant deux fonctions lactones au sein du cycle.

Selon l'invention, un ou plusieurs composés organiques de la famille des dilactones tel que décrits ci-dessous peuvent être employés pour la mise en oeuvre de l'étape c).

Le composé organique de la famille des dilactones est choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione.

Avantageusement, le composé organique de la famille des dilactones est choisi parmi la 1,3-dioxolane-4,5-dione, la 2,2-diméthyl-1,3-dioxane-4,6-dione, la 1,4-dioxane-2,5-dione, la 3,6-diméthyl-1,4-dioxane-2,5-dione et la 5-hydroxy-2,2-diméthyl-1,3-dioxépane-4,7-dione.

Le rapport molaire de composé(s) organique(s) de la famille des dilactones introduit(s) lors de l'étape c) par rapport à l'élément de cobalt introduit à l'étape b) est de préférence compris entre 0,01 et 2,0 mol/mol, de préférence compris entre 0,05 et 1,0.

Le catalyseur préparé selon l'invention peut comprendre en plus du composé organique de la famille des dilactones un composé organique supplémentaire ou un groupe de composés organiques supplémentaires, différent du composé de la famille des dilactones, et connu pour leur rôle d'additifs. La fonction des additifs est d'augmenter l'activité catalytique par rapport aux catalyseurs non additivés. Plus particulièrement, le catalyseur préparé selon l'invention peut en outre comprendre un ou plusieurs composés organiques supplémentaires, différents du composé de la famille des dilactones, et contenant de l'oxygène et/ou de l'azote.

Généralement, le composé organique supplémentaire comporte une ou plusieurs fonctions chimiques choisies parmi une fonction carboxylique, alcool, éther, aldéhyde, cétone, amine, nitrile, imide, oxime, urée et amide.

Le composé organique supplémentaire contenant de l'oxygène peut comporter une ou plusieurs fonctions chimiques choisies parmi une fonction carboxylique, alcool, éther, aldéhyde ou cétone. A titre d'exemple, le composé organique contenant de l'oxygène peut être choisi dans le groupe constitué par l'éthylèneglycol, le diéthylèneglycol, le triéthylèneglycol, un polyéthylèneglycol (avec un poids moléculaire compris entre 200 et 1500 g/mol), le propylèneglycol, le 2-butoxyéthanol, 2-(2-butoxyéthoxy)éthanol, 2-(2-méthoxyéthoxy)éthanol, le triéthylèneglycol-diméthyléther, le glycérol, l'acétophénone, la 2,4-pentanedione, la pentanone, l'acide acétique, l'acide maléique, l'acide malique, l'acide malonique, l'acide oxalique, l'acide gluconique, l'acide tartrique, l'acide citrique, l'acide succinique, l'acide γ-cétovalérique, la γ-valérolactone, l'acide 4-hydroxyvalérique, l'acide 2-pentenoique, l'acide 3-pentenoique, l'acide 4-pentenoique, un succinate de dialkyle C1-C4, l'acétoacétate de méthyle, le dibenzofurane, un éther couronne, l'acide orthophtalique et le glucose. Le composé organique supplémentaire contenant de l'azote peut comporter une ou plusieurs fonctions chimiques choisies parmi une fonction amine ou nitrile. A titre d'exemple, le composé organique contenant de l'azote peut être choisi dans le groupe constitué par l'éthylènediamine, la diéthylènetriamine, l'hexaméthylènediamine, la triéthylènetétramine, la tétraéthylènepentamine, la pentaéthylènehexamine, l'acétonitrile, l'octylamine, la guanidine ou un carbazole.

Le composé organique supplémentaire contenant de l'oxygène et de l'azote peut comporter une ou plusieurs fonctions chimiques choisies parmi une fonction acide carboxylique, alcool, éther, aldéhyde, cétone, amine, nitrile, imide, amide, urée ou oxime. A titre d'exemple, le composé organique contenant de l'oxygène et de l'azote peut être choisi dans le groupe constitué par l'acide 1,2-cyclohexanediaminetétraacétique, la monoéthanolamine (MEA), la N-méthylpyrrolidone, le diméthylformamide, l'acide éthylènediaminetétraacétique (EDTA), l'alanine, la glycine, la proline, la lysine, l'acide nitrilotriacétique (NTA), l'acide N-(2-hydroxyéthyl)éthylènediamine-N,N',N'-triacétique (HEDTA), l'acide diéthylène-triaminepentaacétique (DTPA), la tétraméthylurée, l'acide glutamique, le diméthylglyoxime, la bicine ou la tricine, ou encore un lactame.

Le rapport molaire total de composé(s) organique(s) supplémentaires contenant de l'oxygène et/ou de l'azote autre(s) que le composé organique comportant de la famille des dilactones par rapport à l'élément de cobalt introduit à l'étape b) est de préférence compris entre 0,01 mol/mol à 2 mol/mol, de préférence compris entre 0,1 mol/mol à 2 mol/mol, de manière préférée compris entre 0,2 mol/mol et 1,5 mol/mol, calculé sur la base des composants introduits dans la ou les solution(s) d'imprégnation.

Lorsque le catalyseur contient en outre un composé organique supplémentaire différent du composé organique de la famille des dilactones, ce composé organique supplémentaire peut être soit initialement présent sur le support avant la préparation du catalyseur, soit incorporé au catalyseur à n'importe quel moment de la préparation et par toutes méthodes connues de l'homme du métier.

### Mises en oeuvre des étapes b) et c)

Le procédé de préparation du catalyseur selon l'invention, notamment pour ce qui concerne les étapes b) et c), comporte plusieurs modes de mises en oeuvre. Ils se distinguent notamment par le moment de l'introduction du composé organique qui peut être effectuée soit en même temps que l'imprégnation du cobalt de la phase active (co-imprégnation), soit après l'imprégnation du cobalt de la phase active (post-imprégnation), soit avant l'imprégnation du cobalt de la phase active (pré-imprégnation). De plus, on peut combiner les modes de mise en oeuvre.

Un premier mode de mise en oeuvre consiste à effectuer lesdites étapes b) et c) de façon simultanée de sorte que ledit composé organique et au moins ledit précurseur de cobalt présent dans la phase active sont co-imprégnés sur ledit support (co-imprégnation). Ledit premier mode de mise en oeuvre comprend avantageusement la mise en oeuvre d'une ou plusieurs étapes b). En particulier, une ou plusieurs étapes b) précède(nt) et/ou suive(nt) avantageusement ladite étape de co-imprégnation. Ledit premier mode de mise en oeuvre peut comprendre plusieurs étapes de co-imprégnation.

Un deuxième mode de mise en oeuvre consiste à effectuer ladite étape b) préalablement à ladite étape c) (post-imprégnation). Conformément audit deuxième mode de mise en oeuvre, une ou plusieurs étapes b) de mise en contact d'au moins du cobalt présent dans la phase active du catalyseur précède(nt) ladite étape c).

Un troisième mode de mise en oeuvre consiste à effectuer ladite étape c) préalablement à ladite étape b) (pré-imprégnation). De manière avantageuse, ladite étape c) est suivie de plusieurs étapes b).

Lorsque les étapes b) et c) sont réalisées séparément (post-imprégnation ou pré-imprégnation), une étape de séchage est avantageusement effectuée entre les étapes d'imprégnation. L'étape de séchage intermédiaire est effectuée à une température inférieure à 200°C, avantageusement comprise entre 50 et 180°C, de préférence entre 70 et 150°C, de manière très préférée entre 75 et 130°C et optionnellement une période de maturation a été observée entre l'étape d'imprégnation et l'étape de séchage intermédiaire.

Chacun des trois modes de mises en oeuvre décrits ci-dessus peut être effectué de manière indépendante de sorte que le catalyseur est préparé soit selon ledit premier mode de mise en oeuvre, soit selon ledit deuxième mode de mise en oeuvre soit encore selon ledit troisième mode de mise en oeuvre. Toutefois, il peut être avantageux d'associer ledit premier mode avec ledit deuxième mode ou avec ledit troisième mode : aussi bien le cobalt présent dans la phase active que le composé organique sont déposés au moins à deux reprises sur le support du catalyseur, à savoir au moins une fois par co-imprégnation et au moins une fois par imprégnation successive. Avantageusement, après chaque étape d'imprégnation, que ce soit une étape d'imprégnation du cobalt ou du composé organique, on laisse maturer le support imprégné. La maturation permet à la solution d'imprégnation de se disperser de manière homogène au sein du support.

Toute étape de maturation décrite dans la présente invention est avantageusement réalisée à pression atmosphérique, dans une atmosphère saturée en eau et à une température comprise entre 17°C et 50°C, et de préférence à température ambiante. Généralement une durée de maturation comprise entre dix minutes et quarante-huit heures et de préférence comprise entre trente minutes et cinq heures, est suffisante. Des durées plus longues ne sont pas exclues, mais n'apportent pas nécessairement d'amélioration.

Toute solution d'imprégnation décrite dans la présente invention peut comprendre tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire peut également être avantageusement choisi dans le groupe formé par le carbonate de propylène, le DMSO (diméthylsulfoxyde), la N-méthylpyrrolidone (NMP) ou le sulfolane, pris seul ou en mélange. De manière préférée, on utilise un solvant protique polaire. Une liste des solvants polaires usuels ainsi que leur constante diélectrique peut être trouvée dans le livre « Solvents and Solvent Effects in Organic Chemistry » C. Reichardt, Wiley-VCH, 3ème édition, 2003, pages 472-474. De manière très préférée, le solvant utilisé est l'eau ou l'éthanol, et de manière particulièrement préférée, le solvant est l'eau. Dans un mode de réalisation possible, le solvant peut être absent dans la solution d'imprégnation.

Lorsqu'on effectue plusieurs étapes d'imprégnation, chaque étape d'imprégnation est de préférence suivie d'une étape de séchage intermédiaire à une température inférieure à 200°C, avantageusement comprise entre 50°C et 180°C, de préférence entre 70°C et 150°C, de manière très préférée entre 75°C et 130°C et optionnellement une période de maturation a été observée entre l'étape d'imprégnation et l'étape de séchage intermédiaire.

### Etape d) de séchage

Conformément à l'étape de séchage d) de la mise en oeuvre pour la préparation du catalyseur, préparé selon au moins un mode de mise en oeuvre décrit ci-dessus, le séchage est réalisé à une température inférieure à 200°C, avantageusement comprise entre 50°C et 180°C, de préférence entre 70°C et 150°C, de manière très préférée entre 75°C et 130°C. L'étape de séchage est préférentiellement réalisée pendant une durée comprise entre 1 heure et 4 heures, de préférence sous une atmosphère inerte ou sous une atmosphère contenant de l'oxygène.

L'étape de séchage peut être effectuée par toute technique connue de l'Homme du métier. Elle est avantageusement effectuée à pression atmosphérique ou à pression réduite. De manière préférée, cette étape est réalisée à pression atmosphérique. Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée, le séchage est réalisé en lit traversé en présence d'azote et/ou d'air. De préférence, l'étape de séchage a une durée courte comprise entre 5 minutes et 4 heures, de préférence entre 30 minutes et 4 heures et de manière très préférée entre 1 heure et 3 heures.

Selon une première variante, le séchage est conduit de manière à conserver de préférence au moins 10 % du composé organique de la famille des dilactones introduit lors d'une étape d'imprégnation, de préférence cette quantité est supérieure à 30% et de manière encore plus préférée, supérieure à 50 %, calculée sur la base du carbone restant sur le catalyseur. Lorsqu'un composé organique contenant de l'oxygène et/ou de l'azote autre que le composé organique de la famille des dilactones est présent, l'étape de séchage est réalisée de manière à conserver de préférence au moins 10 %, de préférence au moins 30 %, et de manière très préférée au moins 50 % de la quantité introduite calculée sur la base du carbone restant sur le catalyseur.

A l'issue de l'étape de séchage d), on obtient alors un catalyseur séché, qui sera soumis à une étape d'activation pour sa mise en oeuvre ultérieure en synthèse Fischer -Tropsch.

Selon une autre variante, à l'issue de l'étape d) de séchage, on effectue une étape de calcination e) à une température comprise entre 200°C et 550°C, de préférence comprise entre 250°C et 500°C, sous une atmosphère inerte (azote par exemple) ou sous une atmosphère contenant de l'oxygène (air par exemple). La durée de ce traitement thermique est généralement comprise entre 0,5 heures et 16 heures, de préférence entre 1 heure et 5 heures. Après ce traitement, le cobalt de la phase active se trouve ainsi sous forme oxyde et le catalyseur ne contient plus ou très peu de composé organique introduit lors de sa synthèse. Cependant l'introduction du composé organique lors de sa préparation a permis d'augmenter la dispersion de la phase active menant ainsi à un catalyseur plus actif et/ou plus sélectif.

### Activation (Réduction)

Préalablement à son utilisation dans le réacteur catalytique et la mise en oeuvre du procédé Fischer-Tropsch le catalyseur séché obtenu à l'étape d) ou le catalyseur calciné obtenu à l'étape e) subit avantageusement un traitement réducteur, par exemple avec de l'hydrogène, pur ou dilué, à haute température. Ce traitement permet d'activer ledit catalyseur et de former des particules de cobalt métallique à l'état zéro valent. La température de ce traitement réducteur est préférentiellement comprise entre 200°C et 500°C et sa durée est comprise entre 2 heures et 20 heures.

Ce traitement réducteur est effectué soit in situ (dans le même réacteur que celui où est opérée la réaction de Fischer-Tropsch selon le procédé de l'invention), soit ex situ avant d'être chargé dans le réacteur.

### Procédé de Fischer-Tropsch

Le catalyseur préparé selon l'invention est utilisé dans un procédé de synthèse Fischer-Tropsch.

Le procédé de Fischer-Tropsch conduit à la production d'hydrocarbures essentiellement linéaires et saturés C5+ (ayant au moins 5 atomes de carbone par molécule). Les hydrocarbures produits par le procédé sont ainsi des hydrocarbures essentiellement paraffiniques, dont la fraction présentant les points d'ébullition les plus élevés peut être convertie avec un rendement élevé en distillats moyens (coupes gasoil et kérosène) par un procédé d'hydroconversion tel que l'hydrocraquage et/ou l'hydroisomérisation catalytique(s).

La charge employée pour la mise en oeuvre du procédé comprend du gaz de synthèse. Le gaz de synthèse est un mélange comprenant notamment du monoxyde de carbone (CO) et d'hydrogène (H₂) présentant des rapports molaires H₂/CO pouvant varier dans un rapport de 0,5 à 4 en fonction du procédé par lequel il a été obtenu. Le rapport molaire H₂/CO du gaz de synthèse est généralement voisin de 3 lorsque le gaz de synthèse est obtenu à partir du procédé de vaporeformage d'hydrocarbures ou d'alcool. Le rapport molaire H₂/CO du gaz de synthèse est de préférence de l'ordre de 1,5 à 2 lorsque le gaz de synthèse est obtenu à partir d'un procédé d'oxydation partielle. Le rapport molaire H₂/CO du gaz de synthèse est généralement voisin de 2,5 lorsqu'il est obtenu à partir d'un procédé de reformage thermique. Le rapport molaire H₂/CO du gaz de synthèse est généralement voisin de 1 lorsqu'il est obtenu à partir d'un procédé de gazéification et de reformage du CO₂.

Le catalyseur utilisé dans le procédé de synthèse d'hydrocarbures peut être mis en oeuvre dans différents types de réacteurs, par exemple en lit fixe, en lit mobile, en lit bouillonnant ou encore en lit fluidisé triphasique. La mise en oeuvre du catalyseur en suspension dans un réacteur fluidisé triphasique, préférentiellement de type colonne à bulle, est préférée. Dans cette mise en oeuvre préférée du catalyseur, ledit catalyseur est divisé à l'état de poudre très fine, particulièrement de l'ordre de quelques dizaines de microns, cette poudre formant une suspension avec le milieu réactionnel. Cette technologie est également connue sous la terminologie de procédé "slurry" par l'homme du métier.

Le procédé de synthèse d'hydrocarbures est opéré sous une pression totale comprise entre 0,1 MPa et 15 MPa, de préférence entre 0,5 MPa et 10 MPa, sous une température comprise entre 150°C et 350°C, de préférence entre 180°C et 270°C. La vitesse volumique horaire est avantageusement comprise entre 100 et 20000 volumes de gaz de synthèse par volume de catalyseur et par heure (100 à 20000 h⁻¹) et de préférence entre 400 et 10000 volumes de gaz de synthèse par volume de catalyseur et par heure (400 à 10000 h⁻¹).

Les exemples qui suivent démontrent les gains en performances sur les catalyseurs préparés selon l'invention,

### Exemples

### Exemple 1 (comparatif) : Catalyseur A de formule Co/Al₂O₃

Un catalyseur A comprenant du cobalt déposé sur un support d'alumine est préparé par imprégnation à sec d'une solution aqueuse de nitrate de cobalt de manière à déposer en deux étapes successives de l'ordre de 10 % poids de Co sur une poudre d'alumine gamma (PURALOX^{®} SCCa 5/170, SASOL) de granulométrie moyenne égale à 80 µm, de surface 165 m²/g et de volume poreux mesuré par isotherme d'adsorption d'azote à 0,4 ml/g.

Après une première imprégnation à sec, le solide est séché en lit traversé à 120°C pendant 3 h sous air puis calciné à 400°C pendant 4 h en lit traversé sous flux d'air. Le catalyseur intermédiaire contient environ 6 % poids de Co. Il est soumis à une deuxième étape d'imprégnation à sec au moyen d'une solution de nitrate de cobalt. Le solide obtenu est séché en lit traversé à 120°C pendant 3 h sous air puis calciné à 400°C pendant 4 h en lit traversé sous flux d'air. On obtient le catalyseur final A qui contient 10,5 % poids de Co (sous forme d'oxyde Co₃O₄).

### Exemple 2 (comparatif) : Catalyseur B de formule Co / Al₂O₃.SiO₂

Un catalyseur B comprenant du cobalt déposé sur un support de silice-alumine est préparé par imprégnation à sec d'une solution aqueuse de nitrate de cobalt de manière à déposer en une étape environ 10% poids de Co sur une silice-alumine contenant initialement 5 % poids de SiO₂ et possédant une surface spécifique de 180 m²/g et un volume poreux de 0,8 ml/g

Après l'imprégnation à sec, le solide est séché en lit traversé à 120°C pendant 3 h sous air puis calciné à 400°C pendant 4 h en lit traversé. On obtient le catalyseur final B qui contient 9,9 % poids de Co (sous forme d'oxyde Co₃O₄).

### Exemple 3 (comparatif) : Catalyseur C de formule Co / CoAl₂O₄-Al₂O₃.SiO₂

Un catalyseur C comprenant du cobalt déposé sur un support, à base d'une phase d'oxyde mixte (sous forme de spinelle) incluse dans une silice-alumine, est préparé par imprégnation à sec d'une solution aqueuse de nitrate de cobalt de manière à déposer en une étape environ 10 % poids de cobalt sur le support.

La spinelle présente dans le support du catalyseur C est une spinelle simple formée d'aluminate de cobalt, lequel est inclus dans une silice-alumine contenant 5 % poids de SiO₂, et présentant une surface spécifique de 180 m²/g et un volume poreux de 0,8 ml/g. La préparation de la spinelle incluse dans la silice-alumine est effectuée par imprégnation à sec d'une solution aqueuse de nitrate de cobalt de manière à introduire 5 % poids de Co dans ladite silice-alumine. Après séchage à 120°C pendant 3 heures, le solide est calciné à 850°C pendant 4 heures sous air. Le support du catalyseur noté C' est formé de 5 % poids de cobalt sous forme d'aluminate de cobalt (soit 15 % poids de spinelle) dans la silice-alumine.

La phase active à base de cobalt est ensuite déposée sur ledit support en une étape, par imprégnation à sec, selon un protocole identique à celui décrit pour la préparation du catalyseur B. Les étapes de séchage et de calcination sont également réalisées dans les mêmes conditions opératoires que celles de l'exemple 2. La concentration en cobalt dans la solution de nitrate de cobalt, utilisée pour les imprégnations successives, est choisie pour obtenir le catalyseur C avec la teneur finale en Co voulue.

Le catalyseur C final présente une teneur totale en cobalt de 15,7 % poids (la teneur en Co présent dans la phase spinelle étant comprise) et une teneur en cobalt sous forme d'oxyde Co₃O₄ de 10,7 % poids.

### Exemple 4 (comparatif) : Catalyseur D de formule Co / C_{O}Al₂O₄-Al₂O₃.SiO₂ contenant de l'acide citrique (co-imprégnation)

Un catalyseur D comprenant du cobalt et de l'acide citrique déposés sur un support, à base d'une spinelle incluse dans une silice-alumine, est préparé par imprégnation à sec d'une solution aqueuse de nitrate de cobalt et d'acide citrique de manière à déposer environ 10 % poids de cobalt sur le support.

La phase active à base de cobalt est déposée sur le support C' de l'exemple 3 en une étape, par imprégnation à sec d'une solution contenant du nitrate de cobalt et de l'acide citrique (Sigma Aldrich^{®}, >99%) dans un ratio molaire acide citrique : Co de 0,5. Après l'imprégnation à sec, le solide subit une maturation en atmosphère saturée en eau pendant 9 heures à température ambiante, puis est séché en lit traversé à 120°C pendant 3 h sous air, puis traité sous azote à 400°C pendant 4 h en lit traversé.

Le catalyseur D final présente une teneur totale en cobalt de 14,1 % poids (la teneur en Co présent dans la phase spinelle étant comprise) et une teneur en cobalt sous forme d'oxyde Co₃O₄ de 9,1 % poids.

### Exemple 5 (comparatif) : Catalyseur E de formule Co / C_{O}Al₂O₄-Al₂O₃.SiO₂ contenant de l'acide citrique (post-imprégnation)

Un catalyseur E comprenant du cobalt et de l'acide citrique déposés sur un support, à base d'une spinelle incluse dans une silice-alumine, est préparé par imprégnation à sec d'une solution aqueuse de nitrate de cobalt, puis d'une solution aqueuse d'acide citrique de manière à déposer environ 10 % poids de cobalt sur le support.

La phase active à base de cobalt est déposée sur le support C' de l'exemple 3 en une étape, par imprégnation à sec d'une solution contenant du nitrate de cobalt. Après l'imprégnation à sec, le solide subit un séchage en lit traversé à 120°C pendant 3 h sous air.

Dans une deuxième étape, l'acide citrique est déposé sur le solide précédent en une étape, par imprégnation à sec d'une solution contenant de l'acide citrique (Sigma Aldrich^{®}, >99%) à une concentration permettant d'atteindre un ratio molaire sur le catalyseur final acide citrique : Co de 0,5. Après l'imprégnation à sec, le solide subit une maturation en atmosphère saturée en eau pendant 9 heures à température ambiante, puis est séché en lit traversé à 120°C pendant 3h sous air, puis traité sous azote à 400°C pendant 4h en lit traversé.

Le catalyseur E final présente une teneur totale en cobalt de 14,0 % poids (la teneur en Co présent dans la phase spinelle étant comprise) et une teneur en cobalt sous forme d'oxyde Co₃O₄ de 9,0 % poids.

### Exemple 6 (selon l'invention) : Catalyseur F de formule Co / C_{O}Al₂O₄-Al₂O₃·SiO₂ contenant de la 1,3-dioxolane-4,5-dione

Un catalyseur F comprenant du cobalt et de la 1,3-dioxolane-4,5-dione déposés sur un support, à base d'une spinelle incluse dans une silice-alumine, est préparé par imprégnation à sec d'une solution aqueuse de nitrate de cobalt, puis d'une solution éthanolique de 1,3-dioxolane-4,5-dione de manière à déposer environ 10 % poids de cobalt sur le support.

La phase active à base de cobalt est déposée sur le support C' de l'exemple 3 en une étape, par imprégnation à sec d'une solution contenant du nitrate de cobalt. Après l'imprégnation à sec, le solide subit un séchage en lit traversé à 120°C pendant 3 h sous air.

Dans une deuxième étape, la 1,3-dioxolane-4,5-dione est déposée sur le solide précédent en une étape, par imprégnation à sec d'une solution éthanolique contenant de la 1,3-dioxolane-4,5-dione (AKos^{®}, > 95 %) à une concentration permettant d'atteindre un ratio molaire sur le catalyseur final 1,3-dioxolane-4,5-dione: Co de 0,5. Après l'imprégnation à sec, le solide subit une maturation en atmosphère saturée en eau pendant 9 heures à température ambiante, puis est séché en lit traversé à 120°C pendant 3 h sous air, puis traité sous azote à 400°C pendant 4 h en lit traversé.

Le catalyseur F final présente une teneur totale en cobalt de 14,6 % poids (la teneur en Co présent dans la phase spinelle étant comprise) et une teneur en cobalt sous forme d'oxyde Co₃O₄ de 9,6 % poids.

### Exemple 7 (selon l'invention) : Catalyseur G de formule Co / CoAi₂O₄-Al₂O₃-SiO₂ contenant de la 2,2-diméthyl-1,3-dioxane-4,6-dione

Un catalyseur G comprenant du cobalt et de la 2,2-diméthyl-1,3-dioxane-4,6-dione déposés sur un support, à base d'une spinelle incluse dans une silice-alumine, est préparé par imprégnation à sec d'une solution aqueuse de nitrate de cobalt, puis d'une solution éthanolique de 2,2-diméthyl-1,3-dioxane-4,6-dione de manière à déposer environ 10 % poids de cobalt sur le support.

La phase active à base de cobalt est déposée sur le support C' de l'exemple 3 en une étape, par imprégnation à sec d'une solution contenant du nitrate de cobalt. Après l'imprégnation à sec, le solide subit un séchage en lit traversé à 120°C pendant 3 h sous air.

Dans une deuxième étape, de la 2,2-diméthyl-1,3-dioxane-4,6-dione est déposée sur le solide précédent en une étape, par imprégnation à sec d'une solution éthanolique de 2,2-diméthyl-1,3-dioxane-4,6-dione (Merck^{®}, 96 %) à une concentration permettant d'atteindre un ratio molaire sur le catalyseur final 2,2-diméthyl-1,3-dioxane-4,6-dione: Co de 0,5. Après l'imprégnation à sec, le solide subit une maturation en atmosphère saturée en eau pendant 9 heures à température ambiante, puis est séché en lit traversé à 120°C pendant 3h sous air, puis traité sous azote à 400°C pendant 4 h en lit traversé.

Le catalyseur G final présente une teneur totale en cobalt de 14,9 % poids (la teneur en Co présent dans la phase spinelle étant comprise) et une teneur en cobalt sous forme d'oxyde Co₃O₄ de 9,9 % poids.

### Exemple 8 (selon l'invention) : Catalyseur H de formule Co / C_{O}Al₂O₄-Al₂O₃.SiO₂ contenant de la 1,4-dioxane-2,5-dione

Un catalyseur H comprenant du cobalt et de la 1,4-dioxane-2,5-dione déposés sur un support, à base d'une spinelle incluse dans une silice-alumine, est préparé par imprégnation à sec d'une solution aqueuse de nitrate de cobalt, puis d'une solution éthanolique de 1,4-dioxane-2,5-dione de manière à déposer environ 10 % poids de cobalt sur le support.

La phase active à base de cobalt est déposée sur le support C' de l'exemple 3 en une étape, par imprégnation à sec d'une solution contenant du nitrate de cobalt. Après l'imprégnation à sec, le solide subit un séchage en lit traversé à 120°C pendant 3 h sous air.

Dans une deuxième étape, la 1,4-dioxane-2,5-dione est déposée sur le solide précédent en une étape, par imprégnation à sec d'une solution éthanolique contenant la 1,4-dioxane-2,5-dione (Merck^{®}, > 99 %) à une concentration permettant d'atteindre un ratio molaire sur le catalyseur final 1,4-dioxane-2,5-dione: Co de 0,5. Après l'imprégnation à sec, le solide subit une maturation en atmosphère saturée en eau pendant 9 heures à température ambiante, puis est séché en lit traversé à 120°C pendant 3h sous air, puis traité sous azote à 400°C pendant 4 h en lit traversé.

Le catalyseur H final présente une teneur totale en cobalt de 14,6 % poids (la teneur en Co présent dans la phase spinelle étant comprise) et une teneur en cobalt sous forme d'oxyde Co₃O₄ de 9,6 % poids.

### Exemple 9 (selon l'invention) : Catalyseur I de formule Co / CoAl₂O₄-Al₂O₃.SiO₂ contenant de la 3,6-diméthyl-1,4-dioxane-2,5-dione

Un catalyseur I comprenant du cobalt et de la 3,6-diméthyl-1,4-dioxane-2,5-dione déposés sur un support, à base d'une spinelle incluse dans une silice-alumine, est préparé par imprégnation à sec d'une solution aqueuse de nitrate de cobalt, puis d'une solution éthanolique de 3,6-diméthyl-1,4-dioxane-2,5-dione de manière à déposer environ 10 % poids de cobalt sur le support.

La phase active à base de cobalt est déposée sur le support C' de l'exemple 3 en une étape, par imprégnation à sec d'une solution contenant du nitrate de cobalt. Après l'imprégnation à sec, le solide subit un séchage en lit traversé à 120°C pendant 3 h sous air.

Dans une deuxième étape, la 3,6-diméthyl-1,4-dioxane-2,5-dione est déposée sur le solide précédent en une étape, par imprégnation à sec d'une solution éthanolique contenant la 3,6-diméthyl-1,4-dioxane-2,5-dione (Merck^{®}, 99 %) à une concentration permettant d'atteindre un ratio molaire sur le catalyseur final 3,6-diméthyl-1,4-dioxane-2,5-dione: Co de 0,5. Après l'imprégnation à sec, le solide subit une maturation en atmosphère saturée en eau pendant 9 heures à température ambiante, puis est séché en lit traversé à 120°C pendant 3h sous air, puis traité sous azote à 400°C pendant 4 h en lit traversé.

Le catalyseur I final présente une teneur totale en cobalt de 14,7 % poids (la teneur en Co présent dans la phase spinelle étant comprise) et une teneur en cobalt sous forme d'oxyde Co₃O₄ de 9,7 % poids.

### Exemple 10 (selon l'invention) : Catalyseur J de formule Co / CoAl₂O₄-Al₂O₃.SiO₂ contenant de la 5-hydroxy-2,2-diméthyl-1,3-dioxépane-4,7-dione

Un catalyseur J comprenant du cobalt et de la 5-hydroxy-2,2-diméthyl-1,3-dioxépane-4,7-dione déposés sur un support, à base d'une spinelle incluse dans une silice-alumine, est préparé par imprégnation à sec d'une solution aqueuse de nitrate de cobalt, puis d'une solution éthanolique de 5-hydroxy-2,2-diméthyl-1,3-dioxépane-4,7-dione de manière à déposer environ 10 % poids de cobalt sur le support.

La phase active à base de cobalt est déposée sur le support C' de l'exemple 3 en une étape, par imprégnation à sec d'une solution contenant du nitrate de cobalt. Après l'imprégnation à sec, le solide subit un séchage en lit traversé à 120°C pendant 3 h sous air.

Dans une deuxième étape, la 5-hydroxy-2,2-diméthyl-1,3-dioxépane-4,7-dione est déposée sur le solide précédent en une étape, par imprégnation à sec d'une solution éthanolique contenant la 5-hydroxy-2,2-diméthyl-1,3-dioxépane-4,7-dione (FCH Group^{®}, 90-95 %) à une concentration permettant d'atteindre un ratio molaire sur le catalyseur final 5-hydroxy-2,2-diméthyl-1,3-dioxépane-4,7-dione : Co de 0,5. Après l'imprégnation à sec, le solide subit une maturation en atmosphère saturée en eau pendant 9 heures à température ambiante, puis est séché en lit traversé à 120°C pendant 3h sous air, puis traité sous azote à 400°C pendant 4 h en lit traversé.

Le catalyseur J final présente une teneur totale en cobalt de 14,7 % poids (la teneur en Co présent dans la phase spinelle étant comprise) et une teneur en cobalt sous forme d'oxyde Co3O4 de 9,7 % poids.

### Exemple 11 (selon l'invention) : Catalyseur K de formule Co / CoAl₂O₄-Al₂O₃-SiO₂ contenant de la 2,2-diméthyl-1,3-dioxane-4,6-dione

Le catalyseur K est préparé d'une manière similaire au catalyseur G à ceci près qu'il ne subit pas de traitement thermique sous azote à 400°C en fin de de préparation.

### Exemple 12 : Performances catalytiques des catalyseurs A à K en réaction Fischer-Tropsch

Les catalyseurs A, B, C, D, E, F, G, H, I, J, et K avant d'être testés en synthèse Fischer-Tropsch, sont réduits in situ sous un flux d'hydrogène pur à 400°C pendant 16 heures. La réaction de synthèse Fischer-Tropsch est opérée dans un réacteur tubulaire de type lit fixe et fonctionnant en continu.

Chacun des catalyseurs se trouve sous forme de poudre de diamètre compris entre 40 microns et 150 microns.

Les conditions de test sont les suivantes:
- Température = 216°C
- Pression totale = 2 MPa
- Vitesse volumique horaire (VVH) = 4100 NL/h⁻¹/kg catalyseur
- Rapport molaire H₂/CO = 2/1

Les résultats, exprimés en termes d'activité (conversion du CO en %) et de sélectivité (pourcentage massique d'hydrocarbures en C8+ sur l'ensemble des produits formés), figurent dans le tableau 1.

**Tableau 1**

| Catalyseur | Conversion du CO à 70h sous flux réactionnel (%) | Sélectivité en C8+ à 70h sous flux réactionnel (% poids) |
|---|---|---|
| A (comparatif) | 27,5 | 57,1 |
| B (comparatif) | 38,1 | 65,9 |
| C (comparatif) | 44,7 | 68,0 |
| D (comparatif) | 30,8 | 53,3 |
| E (comparatif) | 41,3 | 56,1 |
| F (invention) | 50,0 | 66,2 |
| G (invention) | 61,1 | 68,5 |
| H (invention) | 56,7 | 70,3 |
| I (invention) | 56,9 | 68,4 |
| J (invention) | 58,3 | 70,0 |
| K (invention) | 62,5 | 71,1 |

Les résultats figurant dans le tableau 1 démontrent que les catalyseurs selon l'invention sont plus actifs et/ou plus sélectifs que les catalyseurs connus de l'art antérieur.

### Annexe

Les tableaux ci-dessous listent des exemples de composés organiques de la famille des dilactones cités dans la présente description et leurs formules développées.

**Tableau 2**

| **Nom** | **Formule** |
|---|---|
| 1,2-dioxétanedione | 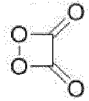 |
| 1,3-diaxolane-4,5-dione | 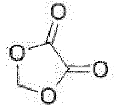 |
| 1,5-dioxolane-2,4-dione | 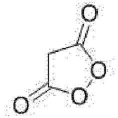 |
| 2,2-dibutyl-1,5-dioxolane-2,4-dione | 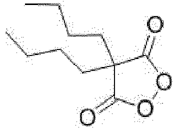 |
| 1,3-dioxane-4,6-dione | 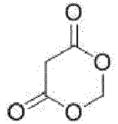 |
| 2,2-diméth-yl-1,3-dioxane-4,6-dione | 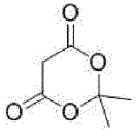 |
| 2,2,5-triméthyl-1,3-dioxane-4,6-dione | 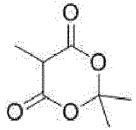 |
| 1,4-dioxane-2,5-dione | 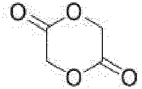 |
| 3,6-diméthyl-1,4-dioxane-2,5-dione | 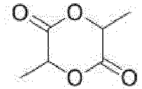 |

**Tableau 3**

| **Nom** | **Formule** |
|---|---|
| 3,6-diisopropyl-1,4-dioxane-2,5-dione | 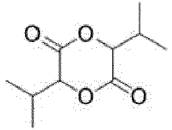 |
| 3,3-ditoluyl-6,6-diphényl-1,4-dioxane-2,5-dione | 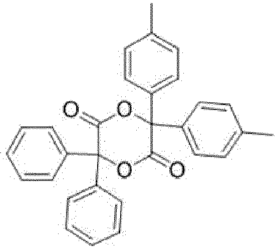 |
| 1,2-dioxépane-3,7-dione | 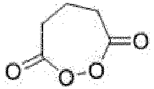 |
| 1,4-dioxépane-5,7-dione | 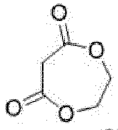 |
| 1,3-dioxépane-4,7-dione | 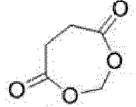 |
| 5-hydroxy-2,2-diméthyl-1,3-dioxépane-4,7-dione | 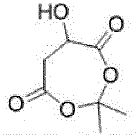 |

## Revendications

1. Procédé de préparation d'un catalyseur contenant une phase active de cobalt, déposée sur un support comprenant de l'alumine, de la silice ou de la silice-alumine, ledit support contenant une phase d'oxyde mixte contenant du cobalt et/ou du nickel, ledit catalyseur étant préparé par un procédé comprenant au moins :
a) une étape de mise en contact d'un support comprenant de l'alumine, de la silice ou de la silice-alumine avec au moins une solution contenant au moins un précurseur de cobalt et/ou de nickel, puis on sèche à une température inférieure à 200°C et on calcine à une température comprise entre 700°C et 1200°C, de manière à obtenir une phase d'oxyde mixte contenant du cobalt et/ou du nickel dans le support,
puis on effectue
b) une étape de mise en contact dudit support contenant ladite phase d'oxyde mixte avec au moins une solution contenant au moins un précurseur de cobalt,
c) une étape de mise en contact dudit support contenant ladite phase d'oxyde mixte avec au moins un composé organique de la famille des dilactones choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione,
les étapes b) et c) pouvant être réalisées séparément, dans un ordre indifférent, ou simultanément,
d) puis on effectue une étape de séchage à une température inférieure à 200°C.

2. Procédé de préparation d'un catalyseur selon la revendication 1, dans lequel la teneur en phase d'oxyde mixte dans le support est comprise entre 0,1 % et 50 % poids par rapport au poids du support.

3. Procédé de préparation d'un catalyseur selon l'une quelconque des revendications 1 ou 2, dans lequel la phase d'oxyde mixte comprend un aluminate de formule CoAl₂O₄ ou NiAl₂O₄ dans le cas d'un support à base d'alumine ou de silice-alumine.

4. Procédé de préparation d'un catalyseur selon l'une quelconque des revendications 1 ou 2, dans lequel la phase d'oxyde mixte comprend un silicate de formule Co₂SiO₄ ou Ni₂SiO₄ dans le cas d'un support à base de silice ou de silice-alumine.

5. Procédé de préparation d'un catalyseur selon l'une quelconque des revendications précédentes, dans lequel la teneur en silice dudit support est comprise entre 0,5 % poids à 30 % poids par rapport au poids du support avant la formation de la phase d'oxyde mixte lorsque le support est une silice-alumine.

6. Procédé de préparation d'un catalyseur selon l'une quelconque des revendications précédentes, dans lequel le rapport molaire de composé organique de la famille des dilactones introduit lors de l'étape c) par rapport à l'élément de cobalt introduit à l'étape b) est compris entre 0,01 mol/mol et 2,0 mol/mol.

7. Procédé de préparation d'un catalyseur selon l'une quelconque des revendications précédentes, dans lequel la teneur en élément cobalt introduit lors de l'étape b) en tant que phase active est comprise entre 2% et 40% poids exprimé en élément cobalt métallique par rapport au poids total du catalyseur.

8. Procédé de préparation d'un catalyseur selon l'une quelconque des revendications précédentes, dans lequel le catalyseur comprend en outre un élément choisi parmi les groupes VIIIB, IA, IB, IIA, IIB, IIIA, IIIB et VA.

9. Procédé de préparation d'un catalyseur selon l'une quelconque des revendications précédentes, dans lequel le catalyseur contient en outre un composé organique supplémentaire autre que le composé de la famille des dilactones, ledit composé organique supplémentaire contenant de l'oxygène et/ou de l'azote, et comportant de préférence une ou plusieurs fonctions chimiques choisies parmi une fonction carboxylique, alcool, éther, aldéhyde, cétone, amine, nitrile, imide, oxime, urée et amide.

10. Procédé de préparation d'un catalyseur selon l'une quelconque des revendications précédentes, dans lequel après l'étape de séchage d), on effectue une étape de calcination e) à une température comprise entre 200 et 550°C, sous une atmosphère inerte ou sous une atmosphère contenant de l'oxygène.

11. Procédé de préparation d'un catalyseur selon la revendication 10, dans lequel on réduit le catalyseur obtenu à l'étape de séchage d) ou obtenu à l'étape de calcination e) à une température comprise entre 200°C et 500°C.

## Patentansprüche

1. Verfahren zur Herstellung eines Katalysators, der eine auf einem Aluminiumoxid, Siliciumdioxid oder Siliciumdioxid-Aluminiumoxid umfassenden Träger abgeschiedene aktive Cobaltphase enthält, wobei der Träger eine Cobalt und/oder Nickel enthaltende Mischoxidphase enthält, wobei der Katalysator durch ein Verfahren hergestellt wird, das mindestens Folgendes umfasst:
a) einen Schritt des Inkontaktbringens eines Aluminiumoxid, Siliciumdioxid oder Siliciumdioxid-Aluminiumoxid umfassenden Trägers mit mindestens einer Lösung, die mindestens eine Cobalt- und/oder Nickelvorstufe enthält, mit anschließendem Trocknen bei einer Temperatur von weniger als 200 °C und Calcinieren bei einer Temperatur zwischen 700 °C und 1200 °C, was eine Cobalt und/oder Nickel enthaltende Mischoxidphase in dem Träger ergibt, dann Durchführen von
b) einem Schritt des Inkontaktbringens des die Mischoxidphase enthaltenden Trägers mit mindestens einer Lösung, die mindestens eine Cobaltvorstufe enthält,
c) einem Schritt des Inkontaktbringens des die Mischoxidphase enthaltenden Trägers mit mindestens einer organischen Verbindung aus der Familie der Dilactone, ausgewählt aus der Gruppe der 4-gliedrigen cyclischen Dilactone bestehend aus 1,2-Dioxetandion oder aus der Gruppe der 5-gliedrigen cyclischen Dilactone bestehend aus 1,3-Dioxolan-4,5-dion, 1,5-Dioxolan-2,4-dion und 2,2-Dibutyl-1,5-dioxolan-2,4-dion oder aus der Gruppe der 6-gliedrigen cyclischen Dilactone bestehend aus 1,3-Dioxan-4,6-dion, 2,2-Dimethyl-1,3-dioxan-4,6-dion, 2,2,5-Trimethyl-1,3-dioxan-4,6-dion, 1,4-Dioxan-2,5-dion, 3,6-Dimethyl-1,4-dioxan-2,5-dion, 3,6-Diisopropyl-1,4-dioxan-2,5-dion und 3,3-Ditoluyl-6,6-diphenyl-1,4-dioxan-2,5-dion oder aus der Gruppe der 7-gliedrigen cyclischen Dilactone bestehend aus 1,2-Dioxepan-3,7-dion, 1,4-Dioxepan-5,7-dion, 1,3-Dioxepan-4,7-dion und 5-Hydroxy-2,2-dimethyl-1,3-dioxepan-4,7-dion,
wobei die Schritte b) und c) separat, in beliebiger Reihenfolge oder gleichzeitig durchgeführt werden können,
d) dann Durchführen eines Trocknungsschritts bei einer Temperatur von weniger als 200 °C.

2. Verfahren zur Herstellung eines Katalysators nach Anspruch 1, wobei der Gehalt an Mischoxidphase in dem Träger zwischen 0,1 und 50 Gew.-%, bezogen auf das Gewicht des Trägers, liegt.

3. Verfahren zur Herstellung eines Katalysators nach Anspruch 1 oder 2, wobei im Fall eines Trägers auf Basis von Aluminiumoxid oder von Siliciumdioxid-Aluminiumoxid die Mischoxidphase ein Aluminat der Formel CoAl₂O₄ oder NiAl₂O₄ umfasst.

4. Verfahren zur Herstellung eines Katalysators nach Anspruch 1 oder 2, wobei im Fall eines Trägers auf Basis von Siliciumdioxid oder von Siliciumdioxid-Aluminiumoxid die Mischoxidphase ein Silicat der Formel Co₂SiO₄ oder Ni₂SiO₄ umfasst.

5. Verfahren zur Herstellung eines Katalysators nach einem der vorhergehenden Ansprüche, wobei dann, wenn es sich bei dem Träger um ein Siliciumdioxid-Aluminiumoxid handelt, der Siliciumdioxidgehalt des Trägers vor der Bildung der Mischoxidphase zwischen 0,5 Gew.-% bis 30 Gew.-%, bezogen auf das Gewicht des Trägers, liegt.

6. Verfahren zur Herstellung eines Katalysators nach einem der vorhergehenden Ansprüche, wobei das Molverhältnis der während Schritt c) eingeführten organischen Verbindung aus der Familie der Dilactone zu dem in Schritt b) eingeführten Cobalt-Element zwischen 0,01 mol/mol und 2,0 mol/mol liegt.

7. Verfahren zur Herstellung eines Katalysators nach einem der vorhergehenden Ansprüche, wobei der Gehalt an in Schritt b) als aktive Phase eingeführtem Cobalt-Element zwischen 2 Gew.-% und 40 Gew.-%, ausgedrückt als Cobalt-Metallelement, bezogen auf das Gesamtgewicht des Katalysators, liegt.

8. Verfahren zur Herstellung eines Katalysators nach einem der vorhergehenden Ansprüche, wobei der Katalysator außerdem ein aus den Gruppen VIIIB, IA, IB, IIA, IIB, IIIA, IIIB und VA ausgewähltes Element umfasst.

9. Verfahren zur Herstellung eines Katalysators nach einem der vorhergehenden Ansprüche, wobei der Katalysator außerdem eine zusätzliche organische Verbindung, die von der Verbindung aus der Familie der Dilactone verschieden ist, enthält, wobei die zusätzliche organische Verbindung Sauerstoff und/oder Stickstoff enthält und vorzugsweise eine oder mehrere chemische Funktionen, die aus einer Carboxyl-, Alkohol-, Ether-, Aldehyd-, Keton-, Amin-, Nitril-, Imid-, Oxim-, Harnstoff- und Amidfunktion ausgewählt sind, umfasst.

10. Verfahren zur Herstellung eines Katalysators nach einem der vorhergehenden Ansprüche, wobei nach dem Trocknungsschritt d) ein Calcinierungsschritt e) bei einer Temperatur zwischen 200 °C und 550 °C unter Inertatmosphäre oder unter einer Sauerstoff enthaltenden Atmosphäre durchgeführt wird.

11. Verfahren zur Herstellung eines Katalysators nach Anspruch 10, wobei der im Trocknungsschritt d) oder im Calcinierungsschritt e) erhaltene Katalysator bei einer Temperatur zwischen 200 °C und 500 °C reduziert wird.

## Claims

1. Process for preparing a catalyst containing an active cobalt phase, deposited on a support comprising alumina, silica or silica-alumina, said support containing a mixed oxide phase containing cobalt and/or nickel, said catalyst being prepared by a process comprising at least:
a) a step of bringing a support comprising alumina, silica or silica-alumina into contact with at least one solution containing at least one precursor of cobalt and/or of nickel, then drying at a temperature below 200°C and calcining at a temperature between 700°C and 1200°C, so as to obtain a mixed oxide phase containing cobalt and/or nickel in the support,
then carrying out
b) a step of bringing said support containing said mixed oxide phase into contact with at least one solution containing at least one precursor of cobalt,
c) a step of bringing said support containing said mixed oxide phase into contact with at least one organic compound of the family of dilactones, selected from the group of cyclic dilactones having 4 ring members, consisting of 1,2-dioxetanedione, or from the group of cyclic dilactones having 5 ring members, consisting of 1,3-dioxolane-4,5-dione, 1,5-dioxolane-2,4-dione and 2,2-dibutyl-1,5-dioxolane-2,4-dione, or from the group of cyclic dilactones having 6 ring members, consisting of 1,3-dioxane-4,6-dione, 2,2-dimethyl-1,3-dioxane-4,6-dione, 2,2,5-trimethyl-1,3-dioxane-4,6-dione, 1,4-dioxane-2,5-dione, 3,6-dimethyl-1,4-dioxane-2,5-dione, 3,6-diisopropyl-1,4-dioxane-2,5-dione and 3,3-ditolyl-6,6-diphenyl-1,4-dioxane-2,5-dione, or from the group of cyclic dilactones having 7 ring members, consisting of 1,2-dioxepane-3,7-dione, 1,4-dioxepane-5,7-dione, 1,3-dioxepane-4,7-dione and 5-hydroxy-2,2-dimethyl-1,3-dioxepane-4,7-dione,
it being possible for steps b) and c) to be performed separately, in any order, or simultaneously,
d) then carrying out a step of drying at a temperature below 200°C.

2. Process for preparing a catalyst according to Claim 1, in which the content of mixed oxide phase in the support is between 0.1% and 50% by weight relative to the weight of the support.

3. Process for preparing a catalyst according to either one of Claims 1 and 2, in which the mixed oxide phase comprises an aluminate of formula CoAl₂O₄ or NiAl₂O₄ in the case of a support based on alumina or on silica-alumina.

4. Process for preparing a catalyst according to either one of Claims 1 and 2, in which the mixed oxide phase comprises a silicate of formula Co₂SiO₄ or Ni₂SiO₄ in the case of a support based on silica or on silica-alumina.

5. Process for preparing a catalyst according to any one of the preceding claims, in which the silica content of said support is between 0.5% by weight and 30% by weight relative to the weight of the support before the formation of the mixed oxide phase when the support is a silica-alumina.

6. Process for preparing a catalyst according to any one of the preceding claims, in which the molar ratio of organic compound of the family of dilactones introduced during step c) relative to the cobalt element introduced in step b) is between 0.01 mol/mol and 2.0 mol/mol.

7. Process for preparing a catalyst according to any one of the preceding claims, in which the content of cobalt element introduced during step b) as active phase is between 2% and 40% by weight expressed as cobalt metal element relative to the total weight of the catalyst.

8. Process for preparing a catalyst according to any one of the preceding claims, in which the catalyst further comprises an element selected from groups VIIIB, IA, IB, IIA, IIB, IIIA, IIIB and VA.

9. Process for preparing a catalyst according to any one of the preceding claims, in which the catalyst further contains an additional organic compound other than the compound of the family of dilactones, said additional organic compound containing oxygen and/or nitrogen, and preferably comprising one or more chemical functions selected from a carboxylic, alcohol, ether, aldehyde, ketone, amine, nitrile, imide, oxime, urea and amide function.

10. Process for preparing a catalyst according to any one of the preceding claims, in which, after the drying step d), a calcining step e) is carried out at a temperature of between 200 and 550°C in an inert atmosphere or in an oxygen-containing atmosphere.

11. Process for preparing a catalyst according to Claim 10, in which the catalyst obtained in the drying step d) or obtained in the calcining step e) is reduced at a temperature of between 200°C and 500°C.
